# FASCICULE DE BREVET EUROPEEN

(11) **EP 1 170 203 B1**
(45) Date de publication et mention de la délivrance du brevet: **12.05.2004**
(21) Numéro de dépôt: 01401736.2
(22) Date de dépôt: 29.06.2001
(51) Int. Cl.: B62M 3/08

(54) **Pédale de cycle à positionnement réglable perfectionné**
Fahrradpedal mit justierbarer Position
Bicycle pedal with adjustable positions

(30) Priorité: 04.07.2000 FR 0008659
(43) Date de publication de la demande: 09.01.2002
(73) Titulaire: Look Cycle International, 58000 Nevers (FR)
(72) Inventeur: Bezet, Nicolas Jean-Guy, 58000 Nevers (FR)
(74) Mandataire: Boutin, Antoine

(56) Documents cités:
- EP-A- 0 058 438
- WO-A-96/00679
- US-A- 4 599 915

## Description

L'invention concerne les pédales automatiques à positionnement réglable de la pédale sur l'axe de pédale, et plus particulièrement les pédales de route, mais aussi les pédales tout terrain.

Une pédale de ce genre comporte un corps de pédale portant des organes d'enclenchement d'un élément d'accrochage fixé sous une chaussure de cycliste, et un axe de pédale destiné à être fixé à une manivelle de pédalier.

On connaît des pédales automatiques de ce genre permettant le réglage du positionnement de la surface d'appui du pied lors du pédalage. Un premier réglage permet de déplacer longitudinalement suivant l'axe de pédale la surface d'appui du pied sur la pédale par rapport à la manivelle de pédalier pour rapprocher le pied le plus possible de celle-ci sans la toucher ou pour l'éloigner de celle-ci. Un deuxième réglage permet de modifier l'angle d'inclinaison du corps de pédale par rapport à l'axe de pédale.

Une pédale automatique permettant ces réglages est connue de la demande de brevet FR2793763 de la demanderesse. Le corps de pédale porte une douille formant siège pour un étui dans lequel l'axe de pédale est logé. Pour le réglage de la position transversale de l'axe, une nervure circulaire sur l'étui est susceptible de coopérer avec une parmi plusieurs rainures circulaires aménagées dans la douille. Ces rainures circulaires sont disposées les unes après les autres de manière à définir des positions transversales successives de l'axe par rapport au corps de pédale. La distance entre les deux rainures extrêmes est d'environ 10 mm, ce qui définit ainsi la plage de réglage axial.

Le réglage de la position angulaire de l'axe de pédale par rapport au corps de pédale est effectué à l'aide de deux rampes courbes parallèles disposées sur la face inférieure du corps de pédale, transversalement à celui-ci, qui coopèrent avec deux épaulements parallèles courbes aménagés sur la face supérieure de la douille. En déplaçant la douille sur les rampes, l'angle d'inclinaison de l'axe de pédale peut être modifié. Cependant, ce réglage de la position angulaire est limité à environ 6°.

Même si ce dispositif de réglage donne en général satisfaction, il présente néanmoins quelques inconvénients. Ainsi, le réglage de la position angulaire ne peut pas être effectué sans influence sur la position transversale de l'axe et il est souvent nécessaire d'effectuer un réglage complémentaire de la position transversale. Il est par ailleurs difficile d'obtenir une position angulaire bien déterminée, ce qui peut aboutir à une position du pied peu ergonomique et par conséquent nuisible. Le réglage de la position angulaire est limité à 6°, alors qu'il est parfois souhaitable d'avoir une plage plus grande de l'ordre de 7°, ou même plus. Il doit également être noté que le réglage de la position transversale ne peut pas être effectuée en continu.

L'invention a pour but de remédier à ces inconvénients en proposant une pédale pourvue de moyens de réglage de la position transversale et de la position angulaire de l'axe de pédale permettant un réglage de la position angulaire sans risque d'erreur d'angle avec une plage plus importante des angles et un réglage de la position transversale en continu. Les moyens de réglage sont en outre extrêmement simples et fiables.

L'invention a également pour but de proposer une pédale pourvue d'un corps de pédale allégé et particulièrement résistant à l'usure.

L'invention a pour objet une pédale automatique de cycle comportant un corps de pédale portant des organes d'enclenchement d'un élément d'accrochage fixé sous une chaussure de cycliste, ainsi qu'un étui contenant un axe de pédale destiné à être fixé à une manivelle de pédalier, l'étui étant relié au corps de pédale par un organe de support fixé à celui-ci et comportant des moyens de réglage de la position transversale et de la position angulaire du corps de pédale par rapport à l'axe de pédale, caractérisée par le fait que pour le réglage de ladite position angulaire, lesdits moyens de réglage comprennent un jeu d'organes de support interchangeables définissant chacun une position angulaire déterminée différente d'un organe de support à l'autre.

Selon d'autres caractéristiques de l'invention :
- ladite position angulaire change selon un ordre croissant ou décroissant d'une valeur de 1 à 2 degrés d'un organe de support au suivant ;
- ladite valeur est sensiblement 1,5 degrés ;
- les organes de support interchangeables sont au nombre de 4 à 6, et de préférence 5.
- ledit organe de support comporte un siège allongé recevant ledit étui de l'axe de pédale, et ledit siège est pourvu d'un taraudage susceptible de coopérer avec un filetage sur ledit étui pour permettre le réglage en continu de la position transversale de celui-ci ;
- ledit organe de support est élastiquement déformable et comporte une douille contenant ledit siège, cette douille étant fendue sur toute sa longueur et comporte de part et d'autre de la fente une aile de fixation pourvue d'une surface d'appui contre le corps de pédale, la surface d'appui de l'une des ailes formant, lorsque l'organe de support est en état détaché, un angle légèrement supérieur à 180° par rapport à la surface d'appui de l'autre aile de fixation, pour permettre le serrage et le desserrage dudit étui dans la douille par la déformation élastique de celle-ci lors de la fixation de l'organe de support sur le corps de pédale ;
- le corps de pédale est en carbone et il est pourvu d'au moins une pièce d'usure destinée à venir en contact avec ledit organe d'accrochage de ladite chaussure sur la pédale ;
- une pièce d'usure comprend une aile encastrée dans la surface supérieure du corps de pédale ;
- la pièce d'usure est détachable ;
- une deuxième pièce d'usure est prévue sous forme d'un bec encastré dans une face interne d'un organe d'enclenchement avant.

D'autres caractéristiques et avantages de l'invention ressortiront de la description ci-dessous d'un mode de réalisation de l'invention, cette description étant faite à titre d'exemple en référence aux dessins annexés sur lesquels :
- La figure 1 est une vue éclatée en perspective d'une pédale selon l'invention;
- La figure 2 est une vue d'extrémité d'un organe de support selon l'invention ;
- Les figures 3A à 3E sont des vues en coupe longitudinale d'organes de support selon l'invention présentant chacun une inclinaison différente du siège de l'étui de l'axe de pédale.

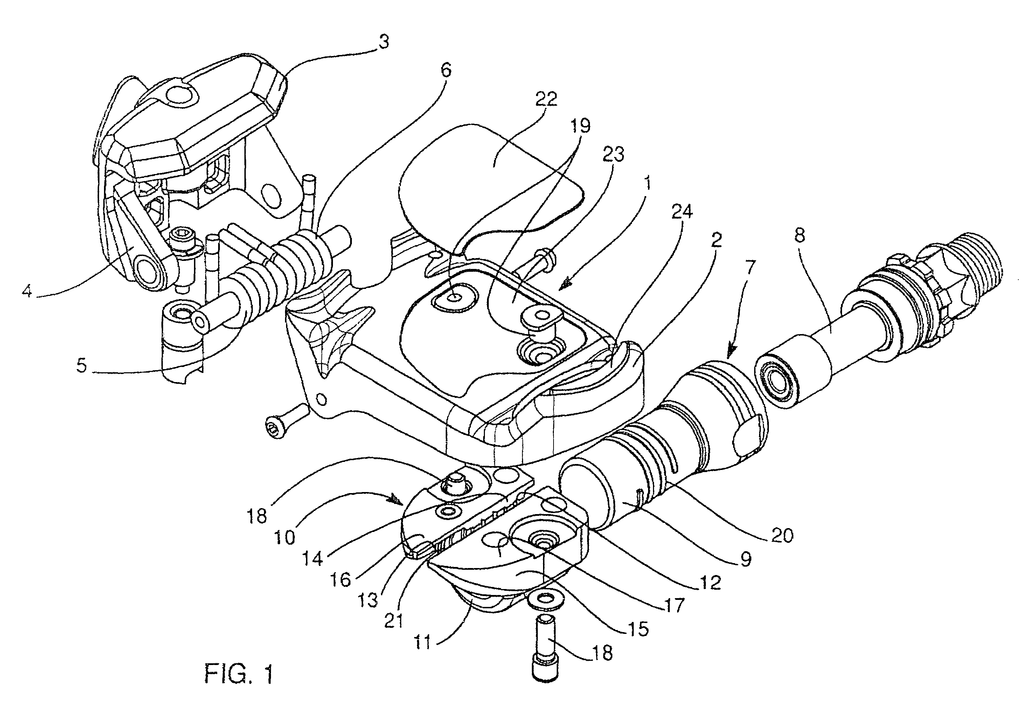

En référence à la figure 1, la pédale comporte un corps de pédale 1 portant des organes d'enclenchement d'un élément d'accrochage (non représenté) fixé sous une chaussure de cycliste (non représentée). Ces organes d'enclenchement comprennent de manière connue un crochet avant fixe 2 et un crochet arrière mobile 3 formé sur un levier 4 sollicité vers la position d'enclenchement par des éléments élastiques constitués par des ressorts de torsion 5, 6.

Le corps de pédale porte en outre un élément allongé sous forme d'un étui 7 dans laquelle un axe de pédale 8 est monté rotatif à l'aide d'un roulement (non représenté).

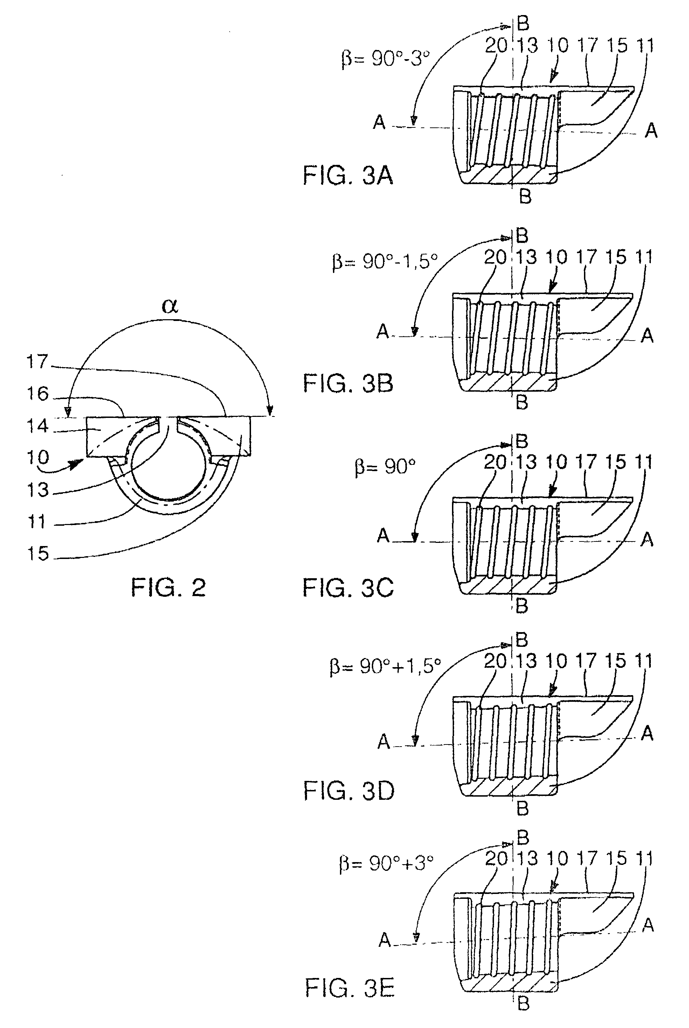

L'étui 7 présente une queue 9 portée par un organe de support 10 comprenant une douille fendue 11 (voir figure 2). L'étui est plus précisément logé dans un siège 12 formé par cette douille qui est fabriquée en un matériau élastique, de préférence en matière plastique. La douille est fendue sur toute sa longueur et comporte de part et d'autre de la fente 13 une aile de fixation 14 respectivement 15 présentant une surface d'appui respective 16, 17 contre le corps de pédale. L'organe de support 10 est fixé au corps de pédale 1 à l'aide de vis 18 et d'écrous 19 traversant la surface d'appui 16 respectivement 17.

Pour le réglage de la position transversale du corps de pédale 1, et par conséquent de la surface d'appui du pied, le long de l'axe de pédale 8, l'étui 7 est pourvue d'un filetage 20 susceptible de coopérer avec un taraudage 21 aménagé sur la paroi du siège 12 dans la douille 11.

Grâce à cette disposition, il est possible d'obtenir un réglage en continu de cette position transversale du corps de pédale. Le pas de vis est tel qu'il donne une plage de réglage correspondant avantageusement à environ 10 mm, permettant un positionnement ajustable de 50 à 60 mm depuis l'axe médian longitudinal du corps de pédale jusqu'à la face externe de la manivelle.

Afin de faciliter ce réglage par le vissage et dévissage de l'étui 7 dans le siège 12 de la douille 11, la surface d'appui 16 de l'une des ailes 14 forme, lorsque au moins une des ailes 14, 15 de l'organe de support 10 est détaché du corps de pédale 1, un angle α légèrement supérieur à 180° et de préférence de 181° par rapport à la surface d'appui 17 de l'autre aile 15.

La déformation élastique de retour de l'organe de support 10 vers sa position sans contrainte a pour effet que la surface d'appui détachée 16 ou 17 s'éloigne du corps de pédale 1 et le vissage et dévissage peuvent aisément être effectués et il suffit pour cela de dévisser l'une des vis de fixation 18 pour effectuer ce réglage, mais cette disposition apporte aussi l'avantage que l'étui est bien serré et bloqué à l'intérieur du siège lorsque les vis de fixation sont vissées. On évite ainsi tout déplacement accidentel du corps de pédale 1 par rapport à l'axe 8 lors du pédalage.

Le réglage de la position angulaire du corps de pédale 1 par rapport à l'axe de pédale 8 est obtenu à l'aide d'un jeu d'organes de support interchangeables définissant chacun une position angulaire déterminée différente d'un organe de support à l'autre.

Le jeu d'organes de support comporte avantageusement 5 pièces comme cela est illustré à la figure 3. La figure 3C montre une position neutre dans laquelle l'axe A-A du siège 12 forme un angle β de 90° par rapport à une ligne B-B perpendiculaire à la surface d'appui 16 ou 17 de l'organe de support.

Les figures 3A et 3B illustrent des inclinaisons du corps de pédale vers le haut. Dans la figure 3B, l'angle β correspond à 90°+1,5° et dans la figure 3A, cet angle correspond à 90°+3,0°.

Les figures 3D et 3E illustrent des inclinaisons du corps de pédale vers le bas. Dans la figure 3D, l'angle β correspond à 90°-1,5° et dans la figure 3E, cet angle correspond à 90°-3,0°.

Grâce au jeu de support donné comme un exemple non limitatif, on obtient ainsi une plage de réglage de la position angulaire correspondant à 6°. Il est bien entendu possible d'avoir un pas angulaire différent, par exemple de 1° et/ou un nombre différent d'organes de support constituant ce jeu.

La pédale est fournie avec un jeu identique à celui décrit ci-dessus, ou différent de celui-ci, et pour faciliter l'identification des supports à angle différent, les organes de supports sont de préférence pourvus de couleurs différentes, mais ils peuvent aussi porter une indication directe de l'angle β obtenu par l'organe de support en question.

Pour alléger le corps de pédale 1, celui-ci peut avantageusement être en carbone. Dans ce cas, il est de préférence pourvu de pièces d'usure dans les endroits destinés à venir en contact avec un organe d'accrochage sous forme d'une cale fixée sous la chaussure de cycliste.

La figure 1 illustre une telle pédale pourvue d'une première pièce d'usure 22 sous forme d'une plaque, par exemple en polycarbonate, destinée à être encastrée dans un logement 23 sur la surface supérieure du corps de pédale. Cette plaque peut être collée ou réalisée en un matériau avec une face adhésive de manière à être détachable pour être facilement remplacée après usure.

La figure 1 montre également une deuxième pièce d'usure 24 sous forme d'un bec encastré sur la face interne de l'organe d'enclenchement avant 2. Ce bec est de préférence en polyamide.

Grâce à l'invention est ainsi obtenue une pédale permettant le réglage aisé des positions transversales et angulaires du corps de pédale, et cela à l'aide de moyens extrêmement simples, fiables et peu coûteux.

## Revendications

1. Pédale automatique de cycle comportant un corps de pédale (1) portant des organes d'enclenchement (2, 3) d'un élément d'accrochage fixé sous une chaussure de cycliste, ainsi qu'un étui (7) contenant un axe de pédale (8) destiné à être fixé à une manivelle de pédalier, l'étui (7) étant relié au corps de pédale (1) par un organe de support (10) fixé à celui-ci et comportant des moyens de réglage (10, 12, 20, 21) de la position transversale et de la position angulaire du corps de pédale (1) par rapport à l'axe de pédale (8), **caractérisée par le fait que** pour le réglage de ladite position angulaire, lesdits moyens de réglage (10, 12, 20, 21) comprennent un jeu d'organes de support interchangeables (10) définissant chacun une position angulaire déterminée différente (β) d'un organe de support à l'autre.

2. Pédale selon la revendication 1, **caractérisée par le fait que** ladite position angulaire change selon un ordre croissant ou décroissant d'une valeur de 1 à 2 degrés d'un organe de support (10) au suivant.

3. Pédale selon la revendication 2, **caractérisée par le fait que** ladite valeur est sensiblement 1,5 degrés.

4. Pédale selon l'une quelconque des revendications précédentes, **caractérisée par le fait que** les organes de support interchangeables (10) sont au nombre de 4 à 6, et de préférence 5.

5. Pédale selon l'une quelconque des revendications précédentes, dans laquelle ledit organe de support (10) comporte un siège (12) allongé recevant ledit étui (7) de l'axe de pédale (8), **caractérisée par le fait que** ledit siège (12) est pourvu d'un taraudage (21) susceptible de coopérer avec un filetage (20) sur ledit étui (7) pour permettre le réglage en continu de la position transversale de celui-ci.

6. Pédale selon l'une quelconque des revendications précédentes, **caractérisée par le fait que** ledit organe de support (10) est élastiquement déformable et comporte une douille (11) contenant ledit siège (7), cette douille étant fendue sur toute sa longueur et comporte de part et d'autre de la fente (13) une aile de fixation (14, 15) pourvue d'une surface d'appui (16, 17) contre le corps de pédale (1), la surface d'appui (16) de l'une (14) des ailes formant, lorsque au moins une aile de fixation (14, 15) de l'organe de support est détaché, un angle (α) légèrement supérieur à 180° par rapport à la surface d'appui (17) de l'autre aile de fixation (15), pour permettre le serrage et le desserrage dudit étui (7) dans la douille (11) par la déformation élastique de celle-ci lors de la fixation de l'organe de support (10) sur le corps de pédale (1).

7. Pédale selon l'une quelconque des revendications précédentes, **caractérisée par le fait que** le corps de pédale (1) est en carbone et qu'il est pourvu d'au moins une pièce d'usure (22, 24) destinée à venir en contact avec ledit organe d'accrochage de ladite chaussure sur la pédale.

8. Pédale selon la revendication 7, **caractérisée par le fait que** ladite au moins une pièce d'usure comprend une plaque (22) encastrée dans la surface supérieure du corps de pédale.

9. Pédale selon la revendication 7 ou 8, **caractérisée par le fait que** ladite au moins une pièce d'usure (22) est détachable.

10. Pédale selon l'une quelconque des revendications 7 à 9, **caractérisée par le fait qu'**une deuxième pièce d'usure (24) est prévue sous forme d'un bec encastré dans une face interne d'un organe d'enclenchement avant (2).

## Patentansprüche

1. Automatisches Fahrradpedal mit einem Pedalkörper (1), der Einschnapporgane (2, 3) für ein Befestigungselement aufweist, das unter einem Fahrradschuh befestigt ist, und mit einem Gehäuse (7), das eine Pedalachse (8) enthält, die dazu bestimmt ist, an einer Tretkurbel befestigt zu werden, wobei das Gehäuse (7) mit dem Pedalkörper (1) durch ein Halteorgan (10) verbunden ist, das an diesem befestigt ist und Einstellmittel (10, 12, 20, 21) zur Einstellung der Querposition und der Winkelposition des Pedalkörpers (1) zur Pedalachse (8) aufweist,
**dadurch gekennzeichnet,**
**dass** diese Einstellmittel (10, 12, 20, 21) für die Einstellung dieser Winkelposition aus einem Satz untereinander austauschbarer Halteorgane (10) bestehen, die jeweils eine andere bestimmte Winkelposition (β) zwischen einem Halteorgan und dem nächsten aufweisen.

2. Fahrradpedal nach Anspruch 1,
**dadurch gekennzeichnet,**
**dass** sich diese Winkelposition von einem Halteorgan (10) zum nächsten in einer aufsteigenden oder abfallenden Reihe eines Werts von 1 bis 2 Grad ändert.

3. Fahrradpedal nach Anspruch 2,
**dadurch gekennzeichnet,**
**dass** dieser Wert im wesentlichen 1,5 Grad beträgt.

4. Fahrradpedal nach einem der vorherigen Ansprüche,
**dadurch gekennzeichnet,**
**dass** die untereinander austauschbaren Halteorgane (10) 4 bis 6 und vorzugsweise 5 an der Zahl sind.

5. Fahrradpedal nach einem der vorherigen Ansprüche, bei dem das genannte Halteorgan (10) einen länglichen Sitz (12) aufweist, der das Gehäuse (7) der Pedalachse (8) aufnimmt,
**dadurch gekennzeichnet,**
**dass** dieser Sitz (12) mit einem Innengewinde (21) versehen ist, das geeignet ist, mit einem Außengewinde (20) auf dem Gehäuse (7) zusammenzuwirken, um das stufenlose Verstellen von dessen Querposition zu ermöglichen.

6. Fahrradpedal nach einem der vorherigen Ansprüche,
**dadurch gekennzeichnet,**
**dass** dieses Halteorgan (10) elastisch verformbar ist und eine Hülse (11) aufweist, die diesen Sitz (12) enthält, wobei diese Hülse über ihre gesamte Länge geschlitzt ist und beiderseits des Schlitzes (13) einen Befestigungsflügel (14, 15) mit einer Anlagefläche (16, 17) aufweist, die an dem Pedalkörper (1) anliegt, wobei die Anlagefläche (16) des einen Flügels (14), wenn mindestens ein Befestigungsflügel (14, 15) des Halteorgans gelöst ist, einen Winkel (α) von etwas mehr als 180° zu der Anlagefläche (17) des anderen Befestigungsflügels (15) bildet, um zu ermöglichen, dass das genannte Gehäuse (7) in der Hülse (11) durch deren elastisches Verformen beim Fixieren des Halteorgans (10) an dem Pedalkörper (1) festgeklemmt bzw. gelöst wird.

7. Fahrradpedal nach einem der vorherigen Ansprüche,
**dadurch gekennzeichnet,**
**dass** der Pedalkörper (1) aus Kohlenstofffasern besteht und dass er mit mindestens einem Verschleißteil (22, 24) versehen ist, das dazu bestimmt ist, mit dem genannten Befestigungselement des genannten Fahrradschuhs auf dem Pedal in Berührung zu kommen.

8. Fahrradpedal nach Anspruch 7,
**dadurch gekennzeichnet,**
**dass** dieses mindestens eine Verschleißteil aus einer Platte (22) besteht, die in der Oberseite des Pedalkörpers eingesetzt ist.

9. Fahrradpedal nach Anspruch 7 oder 8,
**dadurch gekennzeichnet,**
**dass** dieses mindestens eine Verschleißteil (22) abnehmbar ist.

10. Fahrradpedal nach einem der Ansprüche 7 bis 9,
**dadurch gekennzeichnet,**
**dass** ein zweites Verschleißteil (24) in Form eines Schnabels vorgesehen ist, das in eine Innenseite eines vorderen Einschnapporgans (2) eingesetzt ist.

## Claims

1. Automatic cycle pedal comprising a pedal body (1) carrying engagement members (2, 3) for an attachment member fixed below a cycling shoe, as well as a casing (7) containing a pedal axle (8) intended to be fixed to a pedal crank, the casing (7) being connected to the pedal body (1) by a support member (10) fixed thereto and comprising adjustment means (10, 12, 20, 21) for the transverse position and the angular position of the pedal body (1) relative to the pedal axle (8), **characterised in that** to adjust said angular position, said adjustment means (10, 12, 20, 21) comprise a set of interchangeable support members (10), each defining a different predetermined angular position (β) from one support member to the next.

2. Pedal according to claim 1, **characterised in that** said angular position changes according to an increasing or decreasing order by a value of 1 to 2 degrees from one support member (10) to the next.

3. Pedal according to claim 2, **characterised in that** said value is substantially 1.5 degrees.

4. Pedal according to any of the preceding claims, **characterised in that** the interchangeable support members (10) are four to six, preferably five, in number.

5. Pedal according to any of the preceding claims, in which said support member (10) comprises an elongated seat (12) receiving said casing (7) of the pedal axle (8), **characterised in that** said seat (12) is provided with a tapping (21) capable of cooperating with a screw thread (20) on said casing (7) to permit the continuous adjustment of the transverse position thereof.

6. Pedal according to any of the preceding claims, **characterised in that** said support member (10) is elastically deformable and comprises a socket (11) containing said seat (7), this socket being slotted over its entire length and comprising on either side of the slot (13) a securing wing (14, 15) provided with a bearing surface (16, 17) against the pedal body (10), the bearing surface (16) of one (14) of the wings forming, when at least one securing wing (14, 15) of the support member is detached, an angle (α) slightly greater than 180° relative to the bearing surface (17) of the other securing wing (15), to permit the screwing and unscrewing. of said casing (7) in the socket (11) by resilient deformation thereof during the securing of the support member (10) on the pedal body (1).

7. Pedal according to any of the preceding claims, **characterised in that** the pedal body (1) is made of carbon and is provided with at least one wearing member (22, 24) intended to come into contact with said attachment member of said shoe on the pedal.

8. Pedal according to claim 7, **characterised in that** said at least one wearing member comprises a plate (22) sunk into the upper surface of the pedal body.

9. Pedal according to either of claims 7 or 8, **characterised in that** said at least one wearing member (22) is detachable.

10. Pedal according to any of claims 7 to 9, **characterised in that** a second wearing member (24) is provided in the form of a nose sunk into an internal surface of a front engagement member (2).
